# EUROPEAN PATENT SPECIFICATION

(11) **EP 0 906 028 B1**
(45) Date of publication and mention of the grant of the patent: **26.03.2003**
(21) Application number: 97924937.2
(22) Date of filing: 28.05.1997
(51) Int. Cl.: A23G 9/26

(54) **A GRIPPER AND CARRIER DEVICE FOR ICE LOLLIES**
GRIFF UND TRÄGER FÜR EIS AM STIEL
DISPOSITIF DE PREHENSION ET DE SUPPORT POUR SUCETTES GLACEES

(30) Priority: 31.05.1996 DK 61896
(43) Date of publication of application: 07.04.1999
(73) Proprietor: Tetra Laval Holding & Finance S.A., 1009 Pully (CH)
(72) Inventor: CHICINAS, Viorel, DK-8800 Viborg (DK)
(74) Representative: Elmeros, Claus
(86) International application number: DK9700242
(87) International publication number: WO97046113

(56) References cited:
- EP-A- 0 039 515

## Description

The present invention relates to a gripper and carrier element according to the preambel of claim 1 for ice lolly products which, from a conveying path, should be gripped in the sticks projecting from the products, these sticks normally being made as more or less narrow and thin wooden plate elements, in order for the products to be further processed, e.g. in that after being gripped in a lying position in the conveying path they are swung down for being passed through a dip coating bath of chocolate. Later on, the same carrier elements should release the products for further conveying thereof, e.g. to a packaging station.

Since the products should be carried solely by a grip in the projecting carrier sticks or plates, this gripping has to be very firm, and according to a relevant known practice, such as known from EP-A-0 039 515, this is achieved by using a pivot link system with associated coil springs which, by a controlled movement of a control lever over a dead centre position of the pivot link, will operate a free lever part thereof to smash the carrier stick against a fixed backing plate, whilst later on this engagement can be released smashlike by an opposite movement of the control lever. The very function of this system is almost ideal, but it has been found that in the long run the said springs may get loose and fall off, with associated serious contamination problems and maintenance costs; also noticeable wear problems may be encountered.

It could most probably be possible to provide for an improved fixation of the springs, but in connection with the invention as defined in claim 1 it has been realized that a more attractive gripper device can be provided, based partly on the potential spring effect of the carrier sticks or plates themselves, by local bending thereof, whereby at least a part of a total spring system will not be associated with the gripper device. Correspondingly, any remaining part of a spring system of this device may be designed in such a robust and durable manner that the said problem may be eliminated effectively and relatively simply.

The total gripper and carrier element according to the invention may be designed with the same general configuration as before, i.e. in existing systems it may be mounted by a pure changing out, without requiring other modifications of the system. Typically, the device has a suspension end, with which it can be pivotably connected with an overlying conveyor chain, while at its opposite end it has a projecting plate portion serving as a support for the receiving of a carrier stick, which is then clamped against this support by actuation of the said clamping mechanism which, itself, is actuated by a cam controlled influence on the said control lever in response to further movement of the conveyor chain. In the prior art, the carrier stick is clamped by a resilient action against the said support plate.

With the invention this picture is changed only to the extent that there is used a substantially non-yielding clamping member while, in return, the clamping of the carrier stick against the fixed backing plate does not take place against a planar surface thereof, but against an area in which the carrier stick or plate is supported by mutually spaced carrier edges projecting from the backing plate in such a manner that the carrier stick or plate will be forced to be resiliently bent down between these support edges. For a safe engagement and because of required tolerances it is necessary that there is some kind of resiliency in the clamping, but in connection with the invention it will be appreciated that it is possible to hereby rely on the resiliency of the carrier sticks or plates themselves and thus only to a small degree or not at all on some resiliency in the mechanical clamping system. This enables a very robust design of this system or device.

In a preferred embodiment of the system according to the invention the clamping is effected by a pivoting in of a pressure roller mounted at one end of a two-armed pivot 5 lever, the other arm of which constitutes the said control lever. Thus, the mounting and functioning of the control lever will be very simple. When pivoted in, the pressure roller can be held in its clamping position only by its cooperation with the resiliently bent carrier stick or plate or, respectively, in hereby being forced against a suitable stop defining a self holding clamping position. The only required additional function will then be a releasable holding of the pivot system in the swung out position of the clamping roller, and for that purpose it is preferred to use for the pivotable system a central pivot bushing having a facet cooperating with a resilient block member for stabilization of the said bushing in the particular position.

In total, a simple and robust device will be achieved, having not only a very long effective lifetime but also a marked noiseless function.

In the following the invention is described in more detail with reference to the drawing, in which:
Fig. 1 is a side view of a gripper according to the invention, shown in full lines in a horizontal receiving position and in dotted lines in an operative position depending therefrom;
Fig. 2 is a side view of the clamping means of the gripper, shown in clamping position;
Fig. 3 is a top view of Fig. 1; and
Fig. 4 is a front view of Fig. 1.

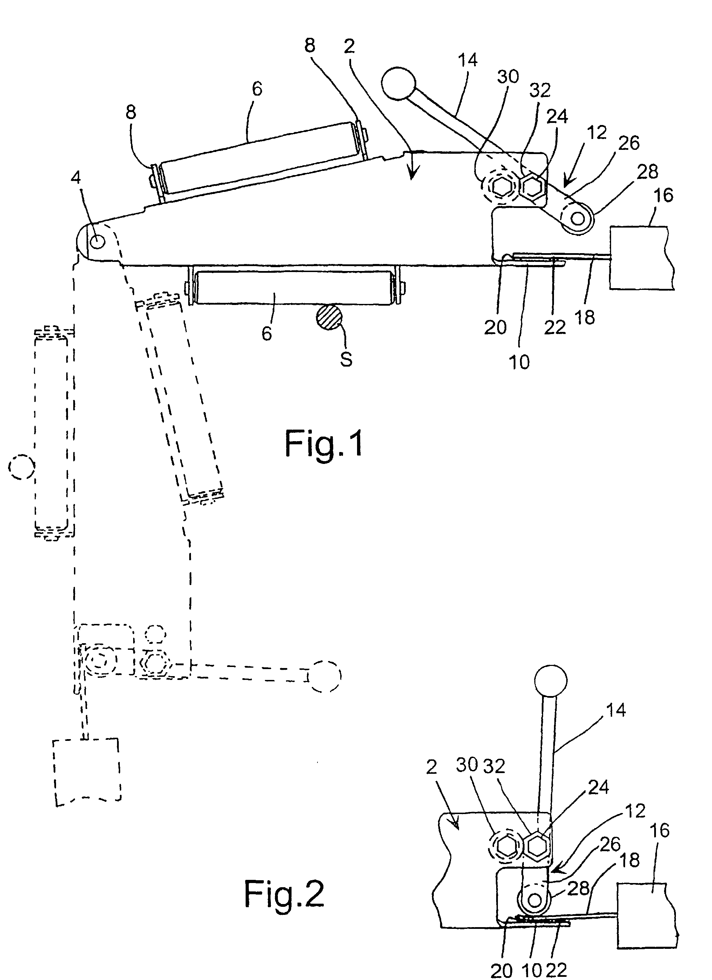

According to Figs 1, 3 and 4, the gripper shown is designed with a U-shaped plate chassis 2 which, seen from the side, is tapering towards one end, at which a slightly projecting cross pin 4 serves to enable a clipping in of the gripper into carrier means of a non-illustrated conveyor chain, with an orientation such that the pin 4 will extend in the longitudinal direction of this chain, such that the gripper as a whole is pivotable in the cross plane of the chain. At each of the lateral sides of the chassis 2 there is arranged a guiding roller 6 held between projecting brackets 8, these rollers cooperating with guiding rail means S extending along the conveying path for controlling the lateral pivoting of the gripper.

At its free, thicker end the chassis 2 is provided with a slightly protruding plate portion/support surface 10 and with a clamping device 12 cooperating therewith, said device 12 having a control lever/clamping member 14 which, also, is guided in a pivotable manner along respective guiding rails.

So far described, the gripper is of a conventional design. Typically it will be used in the manner that in its horizontal, swung out position (Fig. 1) it is moved through a feeding station, supported by a guiding rail S, in which it is merged with a lolly ice product 16, the protruding plate shaped carrier stick 18 of which is introduced over the carrier plate 10, whereafter the clamping system 12 is actuated by actuation of the control lever 14. Thereafter the gripper can be moved further so as to be swung down, e.g. for dipping of the product 16 in a coating bath. Later on, the product may then be released by a simple return pivoting of the control lever 14.

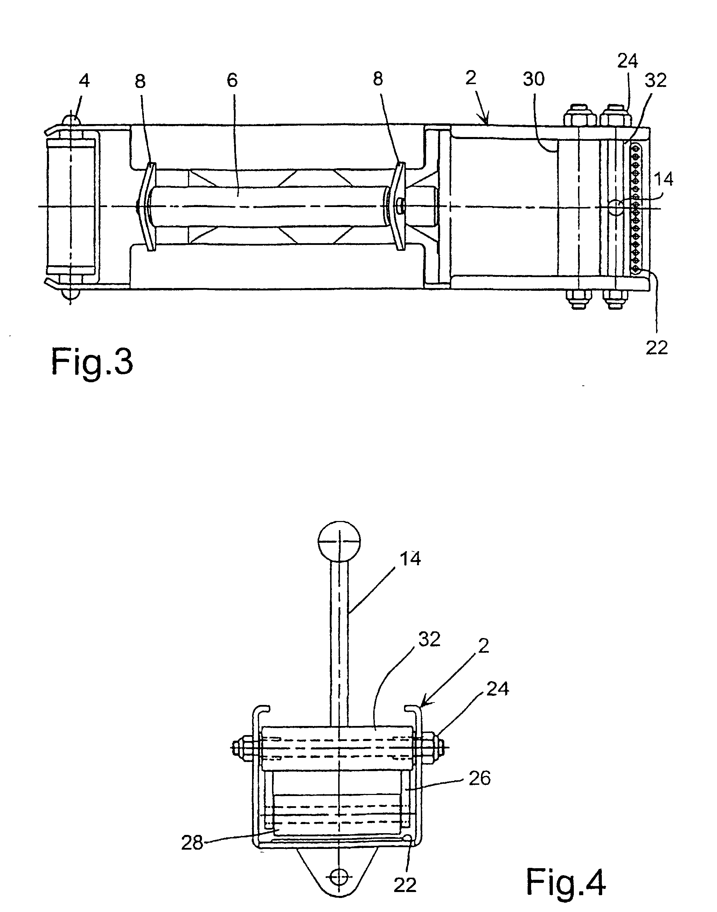

In the gripper according to the invention the plate portion 10 is shaped with two parallel, raised rib portions 20 and 22, preferably - as shown in Fig. 3 - shaped as rows of upcollared holes serving to stabilize the gripped sticks 18. The clamping system is designed as a rotary system with a central cylinder body 24, from which there extends partly the control lever 14 and partly - to the opposite side - a pair of carrier arms 26 for a pressure roller 28, which is preferably made of a rigid plastic.

As indicated in Fig. 2 the system geometry is so adapted that the pressure roller 28 in its swung in condition reaches into or down to a level which, relative to the top level of the ribs 20 and 22, is slightly less spaced from that level than corresponding to the standard thickness of the carrier sticks 18, such that these, in being gripped, will be slightly bent down between the ribs 20 and 22. This bending takes place fully resiliently, and it is sufficient to achieve a safe gripping without any necessity of a further yielding in the clamping system itself, i.e. the latter can be designed in a highly robust manner.

For stabilizing the pivotable system in the open position thereof there is, next to the cylindrical body 24, rigidly mounted a roller 30 of a relatively hard, yet resiliently depressable material, and the cylindrical body 24 is shaped with a facet 32 which, in the said position, engages the roller 30 tangentially. Thus, for a turning out from this position it will be required to exert a noticeable influence on the facet edge of the roller 30.

In practice, this is arranged for in a simple manner in that the cylinder body 24 is a hexagonel element, whereby, after a swinging in of 60° of the carrier arms 26 there will be a neighboring facet 32' engaging the roller 30. Thus, this roller will only be deformed resiliently during the respective pivoting courses, but not in the respective extreme positions of the pivot system. Besides, the roller 30 may also function as a swing-in stop, viz. in being hit by the carrier arms 26; even this may thus take place in a very noiseless manner.

## Claims

1. A gripper and a carrier element for ice lolly products (16), comprising a rigid support surface (10) for receiving a carrier stick (18) protruding from such a product (16), and a clamping device (12) with a clamping member (14) for releasably clamping the stick (18) against the support surface (10), said clamping member (14, 26, 28) being rigidly guided such that it can be brought into a firm clamping position against the stick (18) substantially without any spring action thereon, **characterised in that** the support surface (10) is designed with such a non-planar configuration that the stick in the clamping position is caused to be resiliently bent-out.

2. An element according to claim 1, wherein the support surface (10) is provided with ribs or rows of protrusions (20, 22) at both sides of the clamping member, seen in the clamping position thereof.

3. An element according to claim 1, wherein the clamping member is a roller (28) secured to a stiff and rigidly supported pivot lever (14, 26).

4. An element according to claim 3, wherein the pivot lever (14, 26) has its axis of rotation located in a plane perpendicular to the support surface (10) adjacent to the clamping area thereof.

5. An element according to claim 4, wherein the active clamping area of the clamping member (14, 26, 28) seen in its clamping position is located a short distance behind this perpendicular plane.

6. An element according to claim 5, wherein the pivot lever (14, 26) is blocked against further out-pivoting behind said plane.

7. An element according to claim 3, wherein the pivot lever (14, 26), at or along its pivot axis, has facet portions (32, 32') for cooperation with fixedly mounted spring means (30) in order to releasably hold the clamping member (14, 26, 28) in a forwardly swung out passive position.

8. An element according to claim 7, wherein the spring means consist of a roller (30) or bushing of elastomeric material.

## Patentansprüche

1. Ein Greifer und ein Tragelement für Eis-am-Stiel-Produkte (16), umfassend eine starre Trageoberfläche (10) zum Aufnehmen eines Trägerstiels (18), der aus einem solchen Produkt hervorsteht, und eine Klemmeinrichtung (12) mit einem Klemmelement (14), um den Stiel (18) lösbar zu gegen die Trageoberfläche (10) zu klemmen, wobei das Klemmelement (14, 26, 28) starr derart geführt wird, daß es gegen den Stiel (18) im wesentlichen ohne irgendeine Federtätigkeit auf diesen in eine feste Klemmposition gebracht werden kann, **dadurch gekennzeichnet, daß** die Trageoberfläche (10) mit einer derart nicht ebenen Konfiguration ausgebildet ist, daß der Stiel in der Klemmposition dazu gebracht wird, federnd nach außen gebogen zu werden.

2. Ein Element nach Anspruch 1, bei dem die Trageoberfläche (10) mit Rippen oder Reihen von Vorsprüngen (20, 22), in dessen Klemmposition betrachtet an beiden Seiten des Klemmelements, ausgebildet ist.

3. Ein Element nach Anspruch 1, bei dem das Klemmelement eine Rolle (28) ist, die an einem steifen und starr getragenem Schwenkhebel (14, 26) angebracht ist.

4. Ein Element nach Anspruch 3, bei dem die Drehachse des Schwenkhebels (14, 26) in einer Ebene senkrecht zur Trageoberfläche (10) benachbart zu dessen Klemmbereich angeordnet ist.

5. Ein Element nach Anspruch 4, bei dem der aktive Klemmbereich des Klemmelements (14, 26, 28), in seiner Klemmposition betrachtet, einen geringen Abstand hinter dieser senkrechten Ebene angeordnet ist.

6. Ein Element nach Anspruch 5, bei dem der Schwenkhebel (14, 26) gegen ein weiteres Herausschwenken hinter die Ebene blockiert ist.

7. Ein Element nach Anspruch 3, bei dem der Schwenkhebel (14, 26) an oder entlang seiner Schwenkachse Facettenabschnitte (32, 32') zum Zusammenwirken mit fest angebrachten Federelementen (30) aufweist, um das Klemmelement (14, 26, 28) lösbar in einer nach vorn herausgeschwenkten passiven Position zu halten.

8. Ein Element nach Anspruch 7, bei dem das Federelement aus einer Rolle (40) oder einer Hülse aus elastomerem Material besteht.

## Revendications

1. Elément de préhension et de support pour des sucettes glacées (16), comprenant une surface de support rigide (10) pour recevoir un bâton porteur (18) faisant saillie d'une telle sucette (16), et un dispositif de serrage (12) avec un organe de serrage (14) pour serrer de façon amovible le bâton (18) contre la surface de support (10), ledit organe de serrage (14, 26, 28) étant rigidement guidé de telle sorte qu'il peut être amené dans une position de serrage ferme contre le bâton (18) sensiblement sans une quelconque action élastique sur celui-ci,
**caractérisé en ce que** la surface de support (10) est conçue avec une configuration non planaire de sorte que le bâton, dans la position de serrage, est entraîné à être élastiquement fléchi.

2. Elément selon la revendication 1, dans lequel la surface de support (10) est munie de nervures ou de rangées de saillies (20, 22) au niveau des deux côtés de l'organe de serrage, vu dans la position de serrage de celui-ci.

3. Elément selon la revendication 1, dans lequel l'organe de serrage est un rouleau (28) fixé à un levier à pivot supporté de façon rigide et ferme (14, 26).

4. Elément selon la revendication 3, dans lequel le levier à pivot (14, 26) a son axe de rotation situé dans un plan perpendiculaire à la surface de support (10) attenant à sa zone de serrage.

5. Elément selon la revendication 4, dans lequel la zone de serrage active de l'organe de serrage (14, 26, 28), vu dans sa position de serrage, est située à une courte distance derrière ce plan perpendiculaire.

6. Elément selon la revendication 5, dans lequel le levier à pivot (14, 26) est bloqué contre un pivotement extérieur au-delà dudit plan.

7. Elément selon la revendication 3, dans lequel le levier à pivot (14, 26), au niveau ou le long de son axe de pivot, présente des portions à facettes (32, 32') pour la coopération avec des moyens élastiques montés de façon fixe (30) pour maintenir de façon amovible l'organe de serrage (14, 26, 28) dans une position passive de balancement vers l'avant.

8. Elément selon la revendication 7, dans lequel les moyens élastiques comprennent un rouleau (30) ou une douille en matière élastomère.
